Europäisches Patentamt

European Patent Office

Office européen des brevets

(19)

(11) Veröffentlichungsnummer: **0 078 966**
B1

(12) EUROPÄISCHE PATENTSCHRIFT

(45) Veröffentlichungstag der Patentschrift:
02.04.86

(21) Anmeldenummer: 82109835.7

(22) Anmeldetag: 25.10.82

(51) Int. Cl.⁴: **B 01 J 20/18**, B 01 D 53/04,
C 01 B 3/56

(54) Molekularsieb-Zeolith für die Gewinnung von Wasserstoff mit der Druckwechsel-Adsorptions-Technik.

(30) Priorität: 05.11.81 DE 3143993

(43) Veröffentlichungstag der Anmeldung:
18.05.83 Patentblatt 83/20

(45) Bekanntmachung des Hinweises auf die Patenterteilung:
02.04.86 Patentblatt 86/14

(84) Benannte Vertragsstaaten:
DE FR GB NL

(56) Entgegenhaltungen:
EP - A - 0 008 619
AT - B - 199 621
DE - A - 2 656 633

(73) Patentinhaber: BAYER AG, Konzernverwaltung RP
Patentabteilung, D-5090 Leverkusen 1 Bayerwerk (DE)

(72) Erfinder: Reiss, Gerhard, Dipl.-Ing., Ottweilerstrasse 20,
D-5090 Leverkusen 1 (DE)

## Beschreibung

Die vorliegende Erfindung betrifft den Einsatz von granuliertem Zeolith X mit einem höheren Anteil an Calcium für die Gewinnung von wasserstoffreichen Gasen nach dem Druckwechselverfahren.

Die Gewinnung von hochreinem Wasserstoff aus wasserstoffreichen Gasen wird immer mehr mit der Technik der Druckwechseladsoption (DWA) durchgeführt. Als Ausgangsgas für die DWA-Trennung nimmt man Raffineriegase, Koksofengas oder man stellt ein Wasserstoffgas durch Reformen von Öl, Naphtha oder Erdgas und anschliessender Konvertierung her. Dieses Gas enthält etwa 70–75% $H_2$, 1–3% CO, 2–5% $CH_4$, 15–17% $CO_2$ und im Falle von Erdgas als Ausgangsgas zusätzlich Stickstoff von 1–5%.

In DWA-Anlagen werden die Verunreinigungen bei Gasdrücken von 15–30 bar und Temperaturen von +10 bis +30°C adsorptiv an festen Asorbentien festgehalten und bei Drücken von 1 bis 2 bar (abs) wieder desorbiert. Die Desorption wird mit einem Spülgas, d.h. reinem Wasserstoff durchgeführt. Entscheidend für die Wirtschaftlichkeit dieses DWA-Prozesses ist eine hohe Adsorptionsfähigkeit des Adsorbens für die verschiedenen Verunreinigungen (Adsorbate) und was noch wichtiger ist, eine hohe Desorptionsrate bei kleiner Spülgasmenge.

Um hier ein Optimum zu erreichen, werden für die verschiedenen Adsorbate auch verschiedene Adsorptionsmittel gewählt, d.h. DWA-Adsorber zur Herstellung von Wasserstoff haben meist ein Mehr-Schichtenbett. Die Trocknung wird mit Aluminiumoxid (aktiv) oder Kieselgel, die Entfernung von $CO_2$ und $CH_4$ mit Aktivkohle vorgenommen, wobei noch ein Teil des CO entfernt wird.

Für die Entfernung des restlichen CO und des gesamten Stickstoffs wählt man Molekularsieb-Zeolithe. Diese Zeolithe adsorbieren besonders gut Stoffe, deren Moleküle polar sind. Da $N_2$ ein Quadrupolmoment besitzt und CO leicht polarisierbar ist, werden $N_2$ und CO am besten an Molekularsieb-Zeolithen adsorbiert.

Produktverluste entstehen bei den DWA-Prozessen durch das Spülgas und durch den Entspannungsvorgang von Adsorptionsdruck auf Spülgasdruck. Die Entspannungsverluste sind geringer, je kleiner das Adsorbervolumen ist. Dies bedeutet, dass die Desorptionsrate des Adsorbens nicht auf sein Gewicht, sondern auf sein Volumen bezogen werden muss.

Es sind inzwischen mehrere Verfahren bekannt, mit denen es gelingt, die Entspannungs-Gasverluste minimal zu halten.

Hierzu werden mehrere Adsorptionsmittelbetten eingesetzt, wobei ein Adsorber in mehreren Stufen im Gleichstrom zur Adsorption entspannt wird und hierbei im Gegenstrom zur Adsorption mehrere Adsorber wieder auf Druck gefüllt werden (vgl. DE-OS 26 24 346). Reinen Wasserstoff zum Desorbieren der Verunreinigungen erhält man aus einer oder zwei Entspannungsstufen. In DWA-Anlagen zur Erzeugung von Wasserstoff wurden als Molekularsieb-Zeolithe bisher stets Zeolithe vom Typ CaA, d.h. mit 5 Å zeolithischer Porenweite eingesetzt.

Zeolithe vom Typ CaA zeigen jedoch in vielen Fällen eine nicht voll befriedigende Trennleistung. Es wurde versucht, hier ein Mittel zur Verfügung zu stellen, das diese Nachteile nicht aufweist.

Gegenstand der vorliegenden Erfindung ist nun ein Verfahren zur Abtrennung von wasserstoffreichen Gasen mittels der Druckwechseladsorptionstechnik, welche dadurch gekennzeichnet ist, dass als zeolithisches Füllmaterial der Adsorberbetten Ca-Zeolith X-Granulat, bei dem der Na-Anteil des Zeoliths mindestens zu 50% gegen Calcium ausgetauscht ist, eingesetzt wird, und dass die Desorption bei wenigstens 1,4 bar durchgeführt wird.

Überraschenderweise hat sich herausgestellt, dass Zeolith X in der Ca-Form ein wesentlich besseres Trennmittel als Zeolith CaA darstellt.

Zeolith X in der Natrium-Form ist ein Molekularsieb-Typ, der in Adsorptionsanlagen bereits im grossen Massstab zur Süssung von Erdgas oder zur Entfernung von $H_2O$ und $CO_2$ aus der Ansaugluft von Luftzerlegungsanlagen eingesetzt wird und deshalb bereits eingehend untersucht wurde und im Bereich von DWA-Anlagen zur Wasserstoffgewinnung wegen seiner geringen Adsorptionsleistung z.B. für Stickstoff wenig geeignet ist.

Nach Tabelle 1 hat Na-Zeolith X nur etwa 50% der $N_2$-Kapazität von Ca-Zeolith A. Es ist überraschend, dass durch einen geeigneten Ca-Austausch von Na-Zeolith X die Leistung um mehr als das 3,5 fache vergrössert werden kann.

Es wurde gefunden, dass ein geringer Ca-Austausch von NaX bis etwa 0,5 $CaO/Al_2O_3$ nicht ausreicht, um eine wesentliche Steigerung der Reinigungswirkung in DWA-Wasserstoffanlagen zu erzielen und erst ab etwa 0,6 $CaO/Al_2O_3$ ein Molekularsieb-Zeolith X bevorzugt gegenüber dem bisher üblichen Ca-Zeolith A eingesetzt werden kann.

Das erfindungsgemässe Verfahren, also die Gewinnung von Wasserstoff wird nach an sich bekannten Verfahren – wie z.B. in US-Patent 3 564 816 oder De-OS 28 23 211 beschrieben – durchgeführt.

Das Zeolith-Material wird in an sich bekannter Weise hergestellt (vgl. z.B. DE-PS 20 25 893 oder DE-PS 20 16 838).

Die Eignung der Zeolithe wurde in einem Vortest untersucht und in einem praxisnahen DWA-Versuch nachkontrolliert. In dem Vortest wurde die Qualität des Zeoliths für den Adsorptions- und für die Desorptionsschritte untersucht. Hierbei strömte bei 1 bar und 25°C eine Mischung aus $H_2$ und Adsorbat durch eine Zeolithschüttung von 1.800 mm, wobei die Strömungsgeschwindigkeit 3 cm/s (bezogen auf Leerraum) betrug. Vor dem Versuch wurden alle Zeolithe bei 300°C mit trockenem Stickstoff regeneriert, wodurch die $H_2O$-Restbeladung unter 1 Gew.-% lag. Die De-

sorption der $N_2$-Vorbeladung erfolgte in der Testsäule mit reinem Wasserstoff. Die Adsorption wurde bei einer Austrittskonzentration von 0,2 Vol.-% des Adsorbats beendet und danach im Gegenstrom zur Adsorption Wasserstoff bei einer Strömungsgeschwindigkeit von 3 cm/s durch die Zeolith-Schüttung geleitet. Hierbei war die Desorptionszeit gleich der Adsorptionszeit. Für diese Zeit wurde die Desorptionsrate $a_m$-Des (Nl/kg) bestimmt. Dieser Wert ist entscheidend für die Qualität des Adsorptionsmittels in Wasserstoff-DWA-Anlagen.

Für die Versuche wurden folgende Molekularsieb-Zeolithe eingesetzt:

### Proben A:

Granulate von Ca-Zeolith A wurden analog zur deutschen Patentschrift 20 25 838 binderfrei mit einem Ca-Gehalt entsprechend 0,75 $CaO/Al_2O_3$ in einer Körnung von 1–4 mm hergestellt. Das Schüttgewicht des aktiven Materials betrug nach DIN 8948 725 g/l.

### Proben B:

Granulate des Typs Zeolith X wurden gemäss deutscher Patentschrift 20 16 838 binderfrei hergestellt, wobei der Zeolith A-Anteil 20 Gew.-% betrug und das $SiO_2/Al_2O_3$-Verhältnis des Zeolith X-Anteils 2,5 betrug. Diese Na-Zeolithgranulate der Körnung 1–4 mm wurden einem üblichen Ca-Austausch unterworfen, wobei Proben mit verschiedenem $CaO/Al_2O_3$-Gehalt hergestellt wurden. Das Schüttgewicht des selektiven Granulats lag bei 660 bis 680 g/l.

### Proben C:

Es wurden weiterhin mit 10% Ton gebundene Zeolith X-Granulate hergestellt, wobei vor der Verformung das Na-Zeolith X-Pulver einen üblichen Ca-Austausch erfuhr. Das Na-Zeolith X-Pulver war mit dem der Proben B identisch. Das Schüttgewicht des aktiven Granulats lag bei 650 g/l.

Die Ergebnisse des Vortests sind in der Tabelle 1 zusammengefasst. Die Partialdrücke der Adsorbate in den Vortests entsprechen denen in wasserstoffreichen Reformergasen, weshalb dieser Test gute Aussagen über die Qualität der untersuchten Proben gibt.

Danach kann erfindungsgemäss ein Zeolith X mit einem Ca-Gehalt über 0,5 $CaO/Al_2O_3$ vorteilhafter gegenüber bisher gebräuchlichem Ca-Zeolith A in DWA-Anlagen zur Erzeugung von hochreinem Wasserstoff eingesetzt werden. Es ist überraschend, dass neben $N_2$ und CO auch das nicht polare Argon vorteilhaft mit einem Ca-ausgetauschten Zeolith X entfernt werden kann.

Die erfindungsgemässe Eignung von Ca-Zeolith X wurde in einem praxisnahen Test näher untersucht.

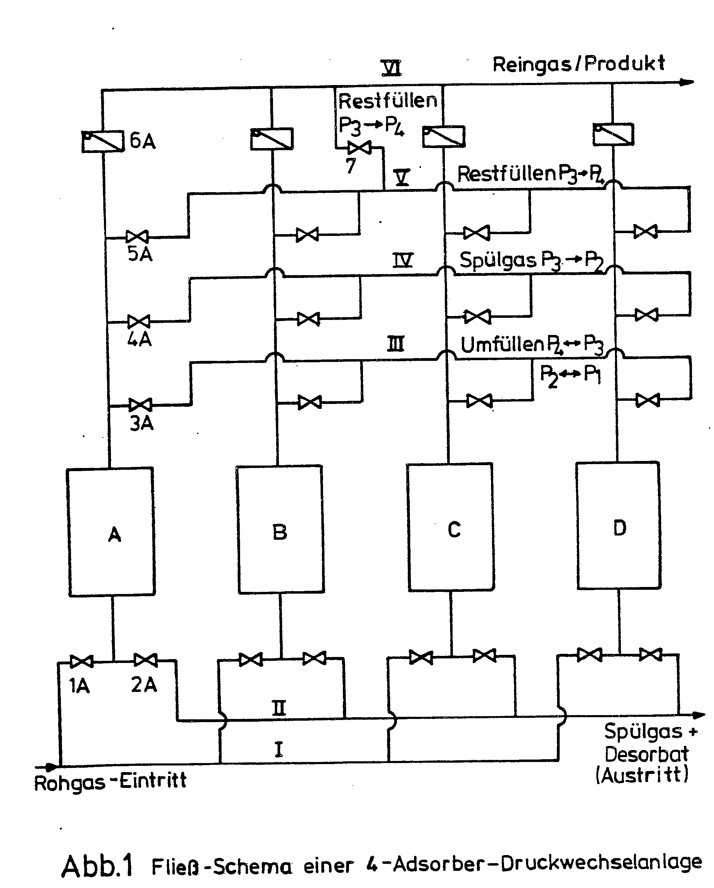

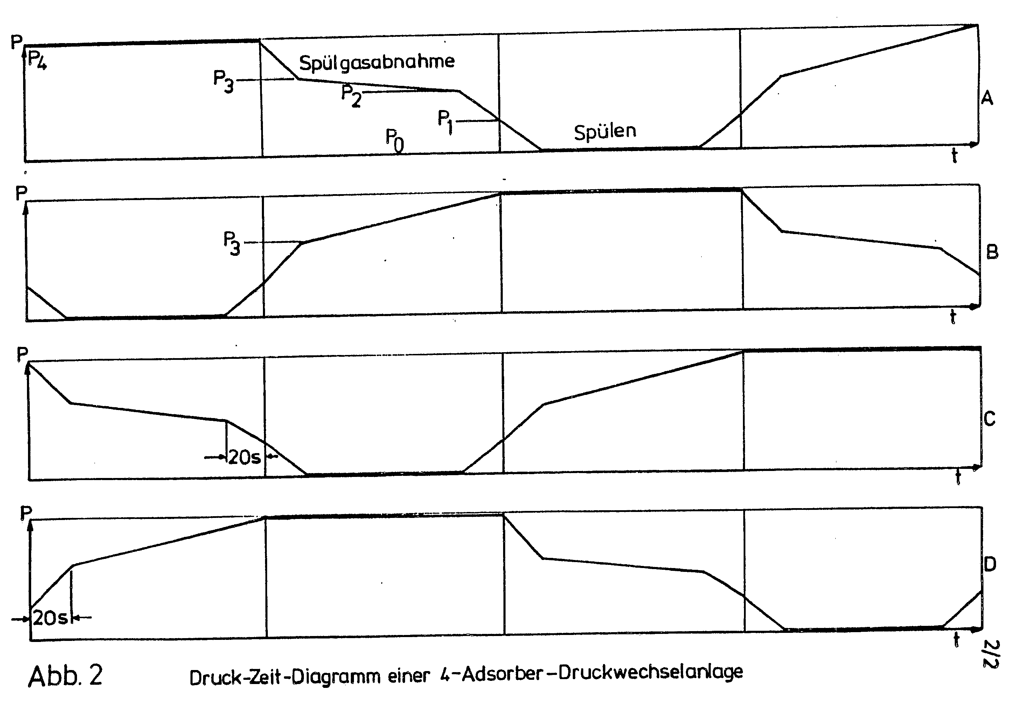

Es wurde eine DWA-Anlage entsprechend Fig. 1 bestehend aus vier Adsorbern mit je einem Volumen von 35 $dm^3$ verwendet. Das Druck-Zeitprogramm ist aus Fig. 2–5 zu entnehmen. Die Adsorption erfolgte stets bei 16 bar (abs), 20 °C Gastemperatur, die Desorption bei etwa 1,4 bar (abs), wobei zur Desorption Gas der zweiten Entspannungsstufe ($P_3$–$P_2$) verwendet wurde.

Das Aufgabegas hatte stets folgende Zusammensetzung:
$H_2$: 72%, $CO_2$: 18%, $CH_4$: 5%, CO: 1,5%, $N_2$: 3,5% (% in Vol.). Der Wassergehalt lag unter 0,1 g/$Nm^3$.

In Tabelle 2 sind die Versuchsergebnisse eines Vergleichstests zwischen Ca-Zeolith A (Versuch 1) und Ca-Zeolith X (Versuch 2) wiedergegeben.

Um einen Vergleich zu ermöglichen, wurde das Verhältnis von Rohgasmenge zu Aktivkohle konstant gelassen. Das Versuchsergebnis zeigt deutlich die überraschend hohe Überlegenheit des Ca-Zeoliths X gegenüber den bisher gebräuchlichen Ca-Zeolith A-Typen.

Wie Fig. 2 zeigt, wird das Gas zur Desorption des Adsorbers C aus der Entspannungsstufe $P_3 \rightarrow P_2$ des Adsorbers A gewonnen. Da bezogen auf die Rohgasmenge im Versuch 2 das Adsorbervolumen um etwa 17% kleiner als im Versuch 1 war, müsste im Versuch 2 obige Druckabsenkung theoretisch um 17% vergrössert werden, um gleiche Spülgasvolumen zu erhalten. Tatsächlich musste der Spülgas-Entspannungsdruck um 20% erhöht werden, da wegen des Nachdesorptionseffekts der Adsorbate mit zunehmender Druckabsenkung pro Druck- und Volumeneinheit weniger gereinigtes Produktgas abgezogen werden kann.

Durch den höheren Spülgasabsenkdruck des Beispiels 2 wurde zusätzlich ein niedriger Enddruck vor dem Spülschritt $P_1$) erhalten, wodurch zusätzlich durch das kleinere Adsorbervolumen (bezogen auf Rohgasmenge) geringere Entspannungsverluste entstanden. Mit Verwendung des erfindungsgemässen Zeoliths konnte im Beispiel 2 eine Wasserstoffausbeute von 82,5% gegenüber 78% des Beispiels 1 erreicht werden.

Ein wesentlicher Vorteil des erfindungsgemässen Zeoliths ergibt sich bei Verwendung von sog. Mehradsorber-Systemen (DOS 26 24 346, DOS 28 23 211) mit 7–10 Adsorbern. Bei diesem System erfolgt eine 3–4-maliger Druckausgleich mit dazwischen geschalteter Entspannungsphase für die Spülgasabnahme. Dadurch erreicht man eine Druckdifferenz des letzten Umfülldruckes zum Spülgasdruck von nur 0,2 bis 0,5 bar. Durch Reduzierung des gesamten Adsorbervolumens unter Verwendung des erfindungsgemässen Zeoliths, ist es deshalb möglich, bei gleicher $H_2$-Ausbeute einen Umfüllschritt und damit einen Adsorber einzusparen. Der damit verbundene Vorteil an Investitionen ist erheblich.

Tabelle 1
Adsorptions-Desorptionstest, 1 bar, 25 °C

| Proben | | CaO/Al$_2$O$_3$ molares Verhältnis | Desorptionsrate in N1 Desorbat /kg Zeolith (am-Des) Konzentration des Adsorbats im Eintritt bei der Adsorbtion | | | |
|---|---|---|---|---|---|---|
| | | | 20% N$_2$ | 50% N$_2$ | 10% CO | 20% Argon |
| A | Ca-Zeolith A | 0,7 | 2,5 | 6,0 | 5,1 | 0,3 |
| B | Na-Ca Zeolith X ohne Binder | 0 | 1,4 | 3,7 | 4,2 | 0,3 |
| | | 0,35 | 2,1 | 5,5 | – | – |
| | | 0,52 | 2,8 | 6,5 | – | – |
| | | 0,6 | 2,55 | 6,75 | – | – |
| | | 0,65 | 2,9 | 7,15 | – | – |
| | | 0,72 | 3,6 | 8,1 | – | – |
| | | 0.75 | 4,2 | 8,7 | – | – |
| | | 0,82 | 5,4 | 10 | 8,5 | 0,75 |
| | | 0,88 | 5,8 | 10,8 | – | – |
| | | 0,98 | 6,8 | 11,25 | – | – |
| C | Na-Ca Zeolith X mit Binder | 0,8 | 4,5 | 7,7 | – | – |
| | | 0,91 | 5,0 | 8,6 | – | – |

Tabelle 2
DWA-Reinigungs- und Trennversuch

| Versuch | Adsorberfüllung | Rohgasmenge Nm$^3$/h | Druckabsenkung für Spülgas bar | Produktgasmenge Nm$^3$/h | Produktgasmenge Nm$^3$/h kg Zeolith | N$_2$-Restgehalt im Produkt ppm Vol. |
|---|---|---|---|---|---|---|
| 1 | 14,5 kg Ca-Zeolith A (Probe A) 6,2 kg Aktivkohle-Typ «Supersorbon» | 8,6 | 5 | 4,83 | 0,333 | 5,0 |
| 2 | 12,4 kg ca-Zeolith (Probe B) 0,82 CaO/Al$_2$O$_3$ 7,3 kg Aktivkohle Typ «Supersorbon» | 10,25 | 6 | 6,09 | 0,49 | 3,5 |

## Patentansprüche

1. Verfahren zur Abtrennung von wasserstoffreichen Gasen mittels der Druckwechseladsorptionstechnik, dadurch gekennzeichnet dass als Füllmaterial der Adsorberbetten Ca-Zeolith X-Granulat, bei dem der Na-Anteil des Zeoliths mindestens zu 50% gegen Calcium ausgetauscht ist, eingesetzt wird, und dass die Desorption bei etwa wenigstens 1,4 bar durchgeführt wird.

2. Verfahren nach Anspruch 1, dadurch gekennzeichnet, dass das eingesetzte Zeolith-Material ein molares SiO$_2$/Al$_2$O$_3$-Verhältnis von 2–3 aufweist.

3. Verfahren nach einem der Ansprüche 1 oder 2, dadurch gekennzeichnet, dass das Zeolith-Granulat 10–30 Gew.-% inaktives Bindemittel und 70–90 Gew.-% aktives Ca-Zeolith X enthält.

4. Verfahren nach einem der Ansprüche 1 oder 2, dadurch gekennzeichnet, dass der molare Anteil an Calcium im Zeolithmaterial 0,5 bis 1,0 CaO/Al$_2$O$_3$ beträgt.

## Revendications

1. Procédé pour séparer des gaz riches en hydrogène par la technique d'adsorption avec variation de pression, caractérisé en ce que l'on utilise en tant que matière de garnissage des lits d'adsorbeurs de la zéolithe X-Ca à l'état granuleux, dans laquelle la proportion de Na de la zéolithe a été échangée pour au moins 50% contre du calcium, et en ce que la désorption est effectuée à une pression d'au moins 1,4 bars environ.

2. Procédé selon la revendication 1, caractérisé en ce que la zéolithe mise en œuvre présente un rapport molaire SiO$_2$/Al$_2$O$_3$ de 2 à 3.

3. Procédé selon l'une des revendications 1 ou 2, caractérisé en ce que les granulés de zéolithe contiennent de 10 à 30% en poids de liant inactif et de 70 à 90% en poids de zéolithe X-Ca active.

4. Procédé selon l'une des revendications 1 ou 2, caractérisé en ce que la proportion molaire de calcium dans la zéolithe est de 0,5 à 1,0 $CaO/Al_2O_3$.

**Claims**

1. Process for separating gases rich in hydrogen by means of the pressure swing adsorption technique, characterised in that Ca-zeolite X granules, in which at least 50% of the Na present in the zeolite is replaced by calcium, are used as the filling material for the adsorber beds, and in that the desorption is carried out at about at least 1.4 bars.

2. Process according to Claim 1, characterised in that the zeolite material used has a molar $SiO_2/Al_2O_3$ ratio of 2–3.

3. Process according to one of Claims 1 or 2, characterised in that the zeolite granules contain 10–30% by weight of inactive binder and 70–90% by weight of active Ca-zeolite X.

4. Process according to one of Claims 1 or 2, characterised in that the molar content of calcium in the zeolite material is 0.5 to 1.0 $CaO/Al_2O_3$.

**Abb.1** Fließ-Schema einer 4-Adsorber-Druckwechselanlage

Abb. 2  Druck-Zeit-Diagramm einer 4-Adsorber-Druckwechselanlage